# EUROPÄISCHE PATENTSCHRIFT

(11) **EP 0 505 523 B1**
(45) Veröffentlichungstag und Bekanntmachung des Hinweises auf die Patenterteilung: **24.01.1996**
(21) Anmeldenummer: 91915791.7
(22) Anmeldetag: 10.09.1991
(51) Int. Cl.: B60S 1/34, B60S 1/52

(54) **WISCHARM, INSBESONDERE FÜR KRAFTFAHRZEUGE**
WIPER ARM, ESPECIALLY FOR MOTOR VEHICLES
BRAS D'ESSUIE-GLACE, EN PARTICULIER POUR VEHICULES AUTOMOBILES

(30) Priorität: 15.09.1990 DE 4029343
(43) Veröffentlichungstag der Anmeldung: 30.09.1992
(73) Patentinhaber: ITT Automotive Europe GmbH, D-60488 Frankfurt am Main (DE)
(72) Erfinder: EGNER-WALTER, Bruno, D-7100 Heilbronn (DE)
(86) Internationale Anmeldenummer: EP9101714
(87) Internationale Veröffentlichungsnummer: WO9205053

(56) Entgegenhaltungen:
- DE-A- 3 907 968
- DE-B- 2 756 991
- FR-A- 1 295 138
- FR-A- 2 263 915

## Beschreibung

Die Erfindung betrifft einen Wischarm mit einem in einer Anpreßdruckfeder geführten Schlauchleitung für Waschflüssigkeit, einem die Anpreßdruckfeder mit einem Befestigungsteil des Wischarms verbindenden Bügel sowie einem aus der Anpreßdruckfeder herausragenden und in Richtung des Bügels sich erstreckenden Schlauchleitungsteil, wobei das zwischen den beiden Endteilen des Bügels angeordnete Mittelteil des Bügels seitlich des Schlauchleitungsteils angeordnet ist.

Bei bekannten Wischarmen der eingangs genannten Art, wie sie zum Beispiel in der DE-B-27 56 991 beschrieben sind, ist die Schlauchleitung in der Anpreßdruckfeder geführt. Die Verbindung zwischen der Anpreßdruckfeder und dem Befestigungsteil erfolgt mittels eines C-Bügels, der beim Verschwenken des Gelenkteils den Schlauch einklemmen und somit beschädigen kann. Andererseits ist es auch bei solchen Wischarmen wünschenswert, die lichte Höhe und Breite des Gelenkteils zu minimieren und dennoch eine funktionsgerechte Anordnung der Anpreßdruckfeder sowie der Schlauchleitung zu gewährleisten.

Ausgehend vom obigen Stand der Technik liegt der Erfindung die Aufgabe zugrunde, den gattungsgemäßen Wischarm so weiterzubilden, daß bei geringer lichter Höhe und Breite des Gelenkteils eine einwandfreie Anbringung der Schlauchleitung im Wischarm gewährleistet ist.

Die Erfindung beruht auf der Überlegung, daß eine funktionsgerechte Anordnung des Schlauchleitungsteils dann möglich ist, wenn man von den bisher üblichen C-Bügeln abweicht und das zwischen seinen beiden Endteilen angeordnete Mittelteil so verformt, daß es bei Verschwenkungen des Gelenkteils nicht mit dem Schlauchleitungsteil in Berührung kommt.

Die gestellte Aufgabe wird also erfindungsgemäß dadurch gelöst, daß das Mittelteil des Bügels derart bogenförmig oder mehrfach gekröpft ausgebildet ist, daß es seitlich einer gedachten Ebene verläuft, welche senkrecht durch den Wischarm und dabei außerdem durch die Enden des Bügels verläuft. Da in dieser gedachten Ebene auch das bisher gefährdete Schlauchleitungsteil verläuft, ist somit ausgeschlossen, daß dieses von dem Bügel beschädigt wird. Der tragende Gedanke der vorliegenden Erfindung kann in unterschiedlicher Weise verwirklicht werden, wobei das Mittelteil erfindungsgemäß bogenförmig ausgebildet oder mehrfach gekröpft ist, so daß es seitlich des Schlauchleitungsteils angeordnet ist, und zwar in jeder Betriebslage des Gelenkteils.

Weitere zweckmäßige und vorteilhafte Ausgestaltungen der Erfindung gehen aus den Unteransprüchen hervor.

Eine besonders zweckmäßige Ausgestaltung sieht vor, daß das Mittelteil in die als Haken ausgebildeten Endteile ausläuft. Hierbei ist es zweckmäßig, wenn die freien Enden der Haken zur Deckseite des Gelenkteils des Wischarms gerichtet sind. Durch diese Maßnahmen ist es möglich, den Bügel mit der Anpreßdruckfeder und dem Befestigungsteil einfach herzustellen.

Eine weitere zweckmäßige Ausgestaltung sieht vor, daß das Schlauchleitungsteil mit einem Anschlußstück im Befestigungsteil verbindbar ist. Am Befestigungsteil ist das Gelenkteil angelenkt, weil die Verbindung zwischen dem Gelenkteil und dem Befestigungsteil mittels eines Schwenklagers hergestellt ist. Das Gelenkteil ist um eine Achse verschwenkbar, in deren Bereich auch die Waschflüssigkeitszufuhr angeordnet ist. Das Anschlußstück ist um die Achse des Befestigungsteils schwenkbar, so daß sichergestellt ist, daß zwischen dem Schlauchleitungsteil und dem Anschlußstück keine Relativbewegungen ausgeübt werden.

Eine weitere zweckmäßige Ausgestaltung sieht vor, daß die Verbindung zwischen dem Bügel und dem Befestigungsteil mittels eines quer zur Achse sich erstreckenden Stiftes herstellbar ist. Hierbei ist der Abstand zwischen dem Schwenkzapfen und dem Stift so bemessen, daß das Schlauchleitungsteil zwischen dem Stift und dem Schwenkzapfen des Gelenkteils angeordnet ist. Der aus elastischem Werkstoff gebildete Schlauchleitungsteil wird beim Verschwenken des Gelenkteils teilweise verformt, jedoch nicht vom Bügel gequetscht, so daß es zu einer Beschädigung des Schlauchleitungsteils nicht kommen kann.

Eine weitere zweckmäßige Ausgestaltung der Erfindung sieht vor, daß das Schlauchleitungsteil sich in Richtung des Gelenkteils erstreckt und im Befestigungsteil etwa mittig angeordnet ist. Hierbei ist es zweckmäßig, wenn das Anschlußstück mit dem Schlauchleitungsteil durch Steckverbindung verbindbar ist. Man erhält somit einen Wischarm, bei dem die Schlauchleitung mit dem sich anschließenden Schlauchleitungsteil annähernd axial angeordnet ist, so daß die lichte Höhe und/oder die lichte Breite des Gelenkteils minimiert werden kann.

Eine weitere zweckmäßige und besonders vorteilhafte Ausgestaltung der Erfindung sieht vor, daß das Befestigungsteil nur ein seitlich von der Längsachse des Gelenkteils angeordnetes Horn besitzt. Somit ist eine Ausführung von Befestigungsteil und entsprechend geformtem Bügel vorgeschlagen, die eine optimale Lagerung des Schlauchleitungsteils ermöglichen. Am Befestigungsteil wird ein Horn entfernt, wodurch ein seitlich abgebogener Bügel in diesem Bereich beim Abklappen um die Lagerstelle geführt werden kann.

Es sei noch ausdrücklich darauf hingewiesen, daß der Bügel auch einstückig mit der Anpreßdruckfeder ausgebildet sein kann.

Die Erfindung betrifft auch einen Bügel für einen Wischarm mit einer in einer Anpreßdruckfeder geführten Schlauchleitung für Waschflüssigkeit, durch den die Anpreßdruckfeder mit einem Befestigungsteil des Wischarms verbindbar ist, wobei daß zwischen den beiden Endteilen des Bügels angeordnete Mittelteil des Bügels seitlich von dem aus der Anpreßdruckfeder herausragenden Schlauchleitungsteil angeordnet ist (siehe DE-B-27 56 991), dadurch gekennzeichnet, daß das Mittelteil des Bügels derart bogenförmig oder mehrfach gekröpft ausgebildet ist, daß es seitlich einer senkrecht zum Wischerarm und durch die Endteile des Bügels verlaufenden Ebene verläuft.

Die Erfindung und deren vorteilhafte Ausgestaltungen werden nachstehend anhand der in der Zeichnung dargestellten Ausführungsbeispiele näher erläutert.

Es zeigen:
- Figur 1: einen Teil des Wischarms in Draufsicht und teilweise geschnitten,
- Figur 2: den in Figur 1 dargestellten Wischarm in Seitenansicht und geschnitten,
- Figur 3: einen Bügel in Draufsicht und
- Figur 4: den in Figur 3 dargestellten Bügel in Seitenansicht.

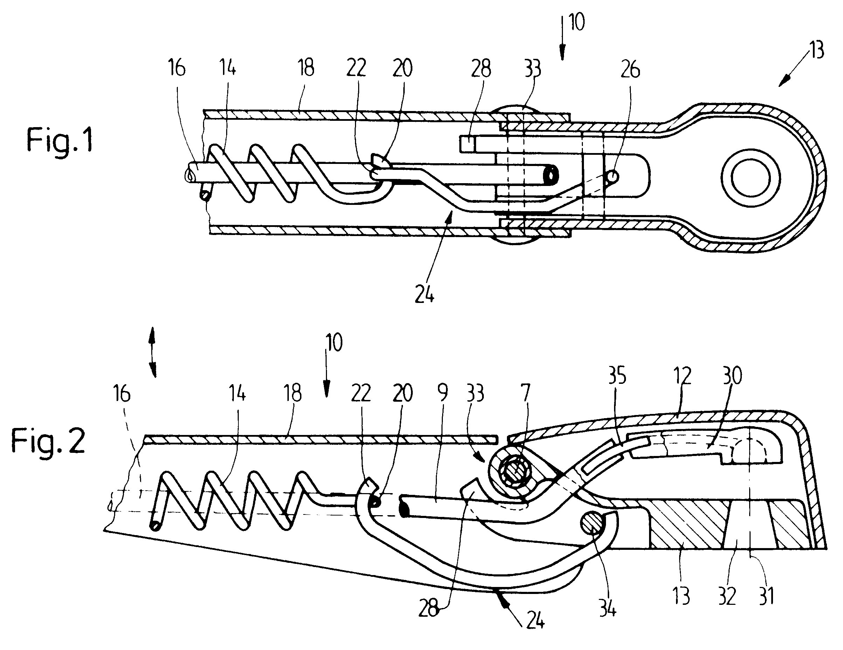

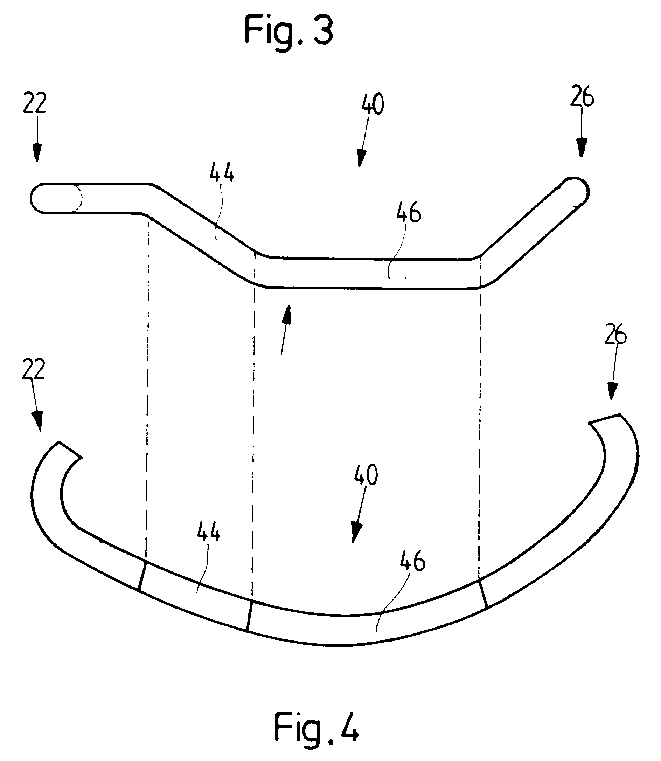

Zu dem herkömmlichen Wischarm nach den Figuren 1 und 2 gehört üblicherweise ein Gelenkteil 18, das schwenkbar an einem Befestigungsteil 13 gelagert ist. Zur Erzeugung des notwendigen Anpreßdruckes ist bei diesem bekannten Wischarm eine Anpreßdruckfeder 14 vorgesehen, die einerseits mit einer nicht näher dargestellten Wischstange verbindbar ist und andererseits über ihren Haken 20 mit dem Bügel 24 lösbar verbindbar ist. Der Bügel 24, der in den Figuren 3 und 4 näher dargestellt ist, besitzt hakenförmige Endteile 22 und 26, von denen das Endteil 22 mit dem Haken 20 verbindbar ist, während das Endteil 26 in einen Stift 34 des Befestigungsteils 13 eingehängt ist. Das Gelenkteil 18 ist am Befestigungsteil 13 mittels eines Schwenkbolzens 33 gelagert sowie in Richtung des Doppelpfeiles verschwenkbar. Der Schwenkbolzen 33 ist zum Stift 34 mit Abstand angeordnet, so daß das Schlauchleitungsteil 9, das aus der Anpreßdruckfeder 14 herausragt und oberhalb des Befestigungsteils 13 mit einem Anschlußstück 30 lösbar verbindbar ist, weder mit dem Schwenkbolzen 33 noch mit dem Stift 34 in Druckverbindung steht. Die Verbindung zwischen dem Anschlußstück 30 und dem Schlauchleitungsteil 9 ist mit einem Verbindungsstück 35 hergestellt, das sowohl in das Anschlußstück 30 als auch in das Schlauchleitungsteil 9 einsteckbar ist. Dem Anschlußstück 30 wird Waschflüssigkeit über eine hohle Wischerwelle zugeführt.

Das Befestigungsteil 13 besitzt eine kegelstumpfförmige Ausnehmung 32 zur Befestigung auf einer Wischerwelle und ist um die Achse 31 verschwenkbar. Ferner trägt das Befestigungsteil 13 eine Abdeckkappe 12. Das Gelenkteil 18 kann somit zwei voneinander unabhängige Bewegungen ausüben, und zwar um die Achse 31 der Wischerwelle und um die Achse 7 des Schwenkbolzens 33. Ferner lassen die Figuren 1 und 2 erkennen, daß das Befestigungsteil 13 nur ein einziges Horn 28 besitzt, so daß der Bügel 24 dort, wo sich üblicherweise das andere Horn des Befestigungsteils befindet, beim Abklappen des Gelenkteils 18 um die Lagerstelle geführt werden kann. Das Schlauchleitungsteil 9 ist nicht nur im Gelenkteil 18, sondern auch im Raum, der durch das Befestigungsteil 13 und die Abdeckung 12 definiert ist, mittig geführt. Zu einer Schlauchleitungsbeschädigung kann es somit nicht kommen.

Die Figuren 3 und 4 lassen erkennen, daß der Bügel 24 aus den Endteilen 22 und 26 besteht, zwischen denen das Mittelteil 40 angeordnet ist. Hierbei handelt es sich um einen mehrfach gekröpften Bügel, dessen Mittelteil 40 zwei Abschnitte 44 und 46 aufweist. Durch die Endteile 22 und 26 wird das Mittelteil 40 mit Bezug auf das Schlauchleitungsteil 9 unterhalb von diesem angeordnet, während durch die Abschnitte 44 und 46 und das Endteil 26 eine seitliche Versetzung des Mittelteils 40 mit Bezug auf das Schlauchleitungsteil 9 erreicht ist. Der Bügel 24 kann vorteilhafterweise aus einem Drahtstück hergestellt sein.

## Patentansprüche

1. Wischarm (10), insbesondere für Kraftfahrzeuge, mit einer in einer Anpreßdruckfeder (14) geführten Schlauchleitung (16) für Waschflüssigkeit, einem die Anpreßdruckfeder (14) mit einem Befestigungsteil (13) des Wischarms (10) verbindenden Bügel (24) sowie einem aus der Anpreßdruckfeder (14) herausragenden und in Richtung des Bügels (24) sich erstreckenden Schlauchleitungsteil (9), wobei das zwischen den beiden Endteilen (22, 26) des Bügels (24) angeordnete Mittelteil (40) des Bügels (24) seitlich des Schlauchleitungsteils (9) angeordnet ist, **dadurch gekennzeichnet,** daß das Mittelteil (40) des Bügels (24) derart bogenförmig oder mehrfach gekröpft ausgebildet ist, daß es seitlich einer senkrecht zum Wischarm (10) und durch die Endteile (22, 26) des Bügels (24) verlaufenden Ebene verläuft.

2. Wischarm nach Anspruch 1, **dadurch gekennzeichnet**, daß das Mittelteil (40) in die als Haken ausgebildeten Endteile (22, 26) ausläuft.

3. Wischarm nach einem der Ansprüche 1 oder 2**, dadurch gekennzeichnet,** daß die freien Enden der Haken (22, 26) zur Deckseite des Gelenkteils (18) des Wischarms (10) gerichtet sind.

4. Wischarm nach einem der Ansprüche 1 bis 3, **dadurch gekennzeichnet,** daß das Schlauchleitungsteil (9) mit einem Anschlußstück (30) im Bereich des Befestigungsteils (13) verbindbar ist.

5. Wischarm nach einem der Ansprüche 1 bis 4, **dadurch gekennzeichnet,** daß das Anschlußstück (30) um die Achse (31) des Befestigungsteils (13) schwenkbar ist.

6. Wischarm nach einem der Ansprüche 1 bis 5, **dadurch gekennzeichnet,** daß die Verbindung zwischen dem Bügel (24) und dem Befestigungsteil (13) mittels eines quer zur Achse (31) sich erstreckenden Stiftes (34) herstellbar ist.

7. Wischarm nach einem der Ansprüche 1 bis 6, **dadurch gekennzeichnet**, daß das Schlauchleitungsteil (9) zwischen dem Stift (34) und dem Schwenklager (33) des Gelenkteils (18) angeordnet ist.

8. Wischarm nach einem der Ansprüche 1 bis 7, **dadurch gekennzeichnet,** daß das Schlauchleitungsteil (9) sich in Richtung des Gelenkteils (18) ertreckt und im Befestigungsteil (13) etwa mittig angeordnet ist.

9. Wischarm nach einem der Ansprüche 1 bis 8, **dadurch gekennzeichnet**, daß das Anschlußstück (30) mit dem Schlauchleitungsteil (9) durch Steckverbindung verbindbar ist.

10. Wischarm nach einem der Ansprüche 1 bis 9, **dadurch gekennzeichnet,** daß das Befestigungsteil (13) nur ein seitlich von der Längsachse des Gelenkteils (18) angeordnetes Horn (28) besitzt.

11. Bügel für einen Wischarm mit einer in einer Anpreßdruckfeder geführten Schlauchleitung für Waschflüssigkeit, durch den die Anpreßdruckfeder mit einem Befestigungsteil des Wischarms verbindbar ist, wobei das zwischen den beiden Endteilen (22, 26) des Bügels (24) angeordnete Mittelteil (40) des Bügels (24) seitlich von dem aus der Anpreßdruckfeder (14) herausragenden Schlauchleitungsteil (9) angeordnet ist, **dadurch gekennzeichnet,** daß das Mittelteil (40) des Bügels (24) derart bogenförmig oder mehrfach gekröpft ausgebildet ist, daß es seitlich einer senkrecht zum Wischarm (10) und durch die Endteile (22, 26) des Bügels (24) verlaufenden Ebene verläuft.

## Claims

1. A wiper arm (10), in particular for motor vehicles, with a hose (16) for washing liquid guided in a pressure spring (14), a yoke (24) connecting the pressure spring (14) with a fastening member (13) of the wiper arm (10), and a hose member (9) which projects from the pressure spring (14) and extends in the direction of the yoke (24), the medium part (40) of the yoke (24) arranged between both end parts (22, 26) of the yoke (24) being disposed laterally of the hose member (9),
**characterized** in that the medium part (40) of the yoke (24) is bent or multiply crimped so as to run laterally of a plane which extends vertically in relation to the wiper arm (10) and through the end parts (22, 26) of the yoke (24).

2. A wiper arm as claimed in claim 1,
**characterized** in that the medium part (40) ends in the hook-shaped parts (22, 26).

3. A wiper arm as claimed in either claim 1 or 2,
**characterized** in that the free ends of the hooks (22, 26) are directed to the deck side of the link (18) of the wiper arm (10).

4. A wiper arm as claimed in any one of claims 1 to 3,
**characterized** in that the hose member (9) is connectable with a fitting (30) in the area of the fastening member (13).

5. A wiper arm as claimed in any one of claims 1 to 4,
**characterized** in that the fitting (30) can be pivoted around the axis (31) of the fastening member (13).

6. A wiper arm as claimed in any one of claims 1 to 5,
**characterized** in that the connection between the yoke (24) and the fastening member (13) can be established by a pin (34) extending transversely to the axis (31).

7. A wiper arm as claimed in any one of claims 1 to 6,
**characterized** in that the hose member (9) is arranged between the pin (34) and the swivelling peg (33) of the link (18).

8. A wiper arm as claimed in any one of claims 1 to 7,
**characterized** in that the hose member (9) extends in the direction of the link (18) and is located approximately centrically in the fastening member (13).

9. A Wiper arm as claimed in any one of claims 1 to 8,
**characterized** in that the fitting (30) can be connected with the hose member (9) by plug-in connection.

10. A wiper arm as claimed in any one of claims 1 to 9,
**characterized** in that the fastening member (13) has only one horn (28) which is laterally arranged with respect to the longitudinal axis of the link (18).

11. A yoke for a wiper arm with a hose for washing liquid guided in a pressure spring, by which yoke the pressure spring is connectable with a fastening member of the wiper arm, the medium part (40) of the yoke (24) arranged between both end parts (22, 26) of the yoke (24) being disposed laterally of the hose member (9) which projects from the pressure spring (14),
**characterized** in that the medium part (40) of the yoke (24) is bent or multiply crimped so as to run laterally of a plane which extends vertically in relation to the wiper arm (10) and through the end parts (22, 26) of the yoke (24).

## Revendications

1. Bras d'essuie-glace comprenant une conduite en tuyau souple (16) pour liquide de lavage qui est guidée dans un ressort de pression d'appui (14), un étrier (24) qui relie le ressort de pression d'appui (14) à une pièce de fixation (13) du bras d'essuie-glace (10), et une partie de conduite en tuyau souple (9) qui fait saillie hors du ressort de pression d'appui (14) et s'étend en direction de l'étrier (24), tandis que la partie centrale (40) de l'étrier (24) qui est située entre les deux parties d'extrémité (22, 26) de l'étrier (24) est disposée sur le côté vis-à-vis de la partie de conduite en tuyau souple (9), caractérisé en ce que la partie centrale (40) de l'étrier (24) est réalisée en forme d'arc ou en étant coudée plusieurs fois, d'une façon telle qu'elle s'étend sur le côté vis-à-vis d'un plan orienté perpendiculairement au bras d'essuie-glace (10) et passant par les parties d'extrémité (22, 26) de l'étrier (24).

2. Bras d'essuie-glace selon la revendication 1, caractérisée en ce que la partie centrale (40) se termine par les parties d'extrémité (22, 26) réalisées en forme de crochet.

3. Bras d'essuie-glace selon l'une des revendications 1 et 2, caractérisé en ce que les extrémités libres des crochets (22, 26) sont toujours orientées vers le côté couvert de la pièce articulée (18) du bras d'essuie-glace (10).

4. Bras d'essuie-glace selon l'une des revendications 1 à 3, caractérisé en ce que la partie de conduite en tuyau souple (9) est agencée de façon à pouvoir être reliée à une pièce de raccordement (30) située dans la zone de la pièce de fixation (13).

5. Bras d'essuie-glace selon l'une des revendications 1 à 4, caractérisé en ce que la pièce de raccordement (30) est agencée de façon à pouvoir pivoter autour de l'axe (31) de la pièce de fixation (13).

6. Bras d'essuie-glace selon l'une des revendications 1 à 5, caractérisé en ce que la liaison entre l'étrier (24) et la pièce de fixation (13) peut être réalisée au moyen d'une broche (34) qui s'étend transversalement à l'axe (31).

7. Bras d'essuie-glace selon l'une des revendications 1 à 6, caractérisé en ce que la partie de conduite en tuyau souple (9)est disposée entre la broche (34) et le palier de basculement (33) de la partie articulée (18).

8. Bras d'essuie-glace selon l'une des revendications 1 à 7, caractérisé en ce que la partie de conduite en tuyau souple (9) est orientée suivant la direction de la pièce articulée (18) et est disposée dans la pièce de fixation (13) approximativement en son milieu.

9. Bras d'essuie-glace selon l'une des revendications 1 à 8, caractérisé en ce que la pièce de raccordement (30) est agencée de façon à pouvoir être reliée à la partie de conduite en tuyau souple (9) au moyen d'une liaison par emboîtement.

10. Bras d'essuie-glace selon l'une des revendications 1 à 9, caractérisé en ce que la pièce de fixation (13) ne comporte qu'une oreille (28) qui est disposée sur le côté vis-à-vis de l'axe longitudinal de la pièce articulée (18).

11. Etrier, pour bras d'essuie-glace comprenant une conduite en tuyau souple pour liquide de lavage, au moyen duquel le ressort de pression d'appui est agencé de façon à pouvoir être relié à une pièce de fixation du bras d'essuie-glace, tandis que la partie centrale (40) de l'étrier (24) qui est située entre les deux parties d'extrémité (22, 26) de l'étrier (24) est disposée sur le côté vis-à-vis de la partie de conduite en tuyau souple (9) qui fait saillie hors du ressort de pression d'appui (14), caractérisé en ce que la partie centrale (40) de l'étrier (24) est réalisée en forme d'arc ou en étant coudée plusieurs fois, d'une façon telle qu'elle s'étend sur le côté vis-à-vis d'un plan orienté perpendiculairement au bras d'essuie-glace (10) et passant par les parties d'extrémité (22, 26) de l'étrier (24).
